# EUROPEAN PATENT SPECIFICATION

(11) **EP 0 727 956 B1**
(45) Date of publication and mention of the grant of the patent: **06.02.2002**
(21) Application number: 94930835.7
(22) Date of filing: 19.10.1994
(51) Int. Cl.: A47J 43/04, A21D 13/00, A21B 7/00

(54) **APPARATUS AND METHOD FOR A BREADMAKING MACHINE**
GERÄT UND VERFAHREN ZUM BEREITEN VON BROT
APPAREIL ET PROCEDE DE PANIFICATION

(30) Priority: 22.10.1993 US 140323
(43) Date of publication of application: 28.08.1996
(73) Proprietor: Anderson, Richard M., Waterville, OH 43566 (US)
(72) Inventor: Anderson, Richard M., Waterville, OH 43566 (US)
(74) Representative: Bryer, Kenneth Robert
(86) International application number: PCT/US94/12093
(87) International publication number: WO 95/10969

(56) References cited:
- EP-A- 0 022 989
- WO-A-82/00011
- FR-A- 2 676 619
- GB-A- 1 201 365
- US-A- 3 822 056
- US-A- 4 250 802
- US-A- 4 366 178
- US-A- 4 631 192
- US-A- 4 649 810
- US-A- 4 691 625
- US-A- 4 756 921
- US-A- 4 877 630

## Description

### Background of the Invention

### Field of the Invention

The present invention relates to breadmaking machines and, more particularly, to a breadmaking machine for making a variety of breads using a multi-station assembly.

### Description of the Prior Art

Various apparatus for making bread and related goods are known in the art. Specifically, such apparatus usually include a means for mixing a dough and then for baking the mixture to produce a desired product.

US Patent No. 4, 938, 127 issued to van Lengerich, discloses a device for automatically making a cookie type product. Two extrusion machines are used in series to blend, mix and deliver a partially formed product to the second extrusion device where further ingredients are added. The product is then mixed and delivered to conveyors for transport through a dielectric heating oven.

US Patent No. 5, 016, 528 issued to Chen, discloses baking equipment for producing buns, cakes, and the like. The product is produced in individual pan and cover containers in which dough is delivered to the pans and subsequently shaped and treated in successive steps before delivery to an oven for baking.

Specification FR2 676 619 discloses a machine and process for producing pastry doughs according to preselected recipes based upon a single farinaccous product.

Specification GB1 201 365 discloses the process of a continuous production of dough from flour which comprises continuously feeding a metered stream of about 3/4 of the flour and a suspension of all the yeast and nearly all the water into a first mixing stage, continuously mixing it under controlled conditions to form a batter and then feeding the batter to a second mixing stage wherein the remainder of the ingredients are added. This specification is concerned with the production of a single product only.

Specification WO82/00011 discloses a process and apparatus for metering the supply of flour to one or more kneaders during the production of dough. The rate of supply of the ingredients is determined by measuring changes in weight of appropriate hoppers by a central control unit and the flow rates and times are varied by that central control unit to maintain consistency between the doughs produced in each of the kneaders.

The shortcomings of the above-described patents include the lack of selection of ingredients which can be provided during the mixing stage in order to formulate different end products. Another drawback is the failure to provide a grinder for grinding whole grain supplied from a supply bin in combination with wet and dry ingredients in order to produce a wide variety of baked goods.

The present invention seeks to overcome these shortcomings and provide a facility which can be operated directly by a customer.

According to one aspect of the present invention there is provided a process for producing a variety of dough products comprising the operations of
a) selectively feeding at least one grain product from an associated grain store (12) to a mixing station (14);
b) selectively feeding at least one dry non-grain ingredient from an associated dry ingredient store (35) to the mixing station (14);
c) selectively feeding at least one liquid ingredient from an associated liquid ingredient store (36) to the mixing station (14);
d) mixing the ingredients supplied to the mixing station (14);
   in which said feeding steps b) to d) are determined according to one of a plurality of recipes stored in a memory contained in a central control unit (18) and in which the selection of said recipe is determined via an interface (98, 126) linked to said central control unit (18), whereby step a) is performed by selecting said at least one grain product from a plurality of grain product types stored in a plurality of grain storages (12a-d) of said grain store (12) each containing a different grain product, the selection of said recipe by a customer at said interface (98, 126) determining the selection of said at least one grain product so as to produce a dough for a desired dough product.

Preferably step b) and step c) are each performed by selecting said at least one dry non-grain ingredient and said at least one liquid ingredient from respective pluralities of dry non-grain ingredients and liquid ingredients stored in a respective plurality of storages (35a-d, 36a-d) of the dry ingredient store (35) and the liquid ingredient store (36) each containing a different respective ingredient.

The process of the invention may also include the further step of grinding said at least one grain product in a grinder (16) immediately prior to delivery to the mixing station.

Likewise the process preferably include the steps of
- delivering said dough to a proofer (88), and
- delivering the proofed dough to a baking station (92)
whereby to proof and bake the dough according to the selection of said recipe.

The process of the invention may also be characterised in that said grain and non-grain ingredients are fed to different mixers (108, 110, 112) within the mixing station (14), in that different doughs are supplied to respective ovens (118, 120, 122), and in that said ovens are operated by the control unit (18) to bake each of the separate doughs according to the selection of a recipe.

Preferably the grain product is a whole grain product.

In another aspect the present invention provides apparatus for producing a variety of dough products comprising
a) a dry non-grain ingredient store (35);
b) a grain product store (12);
c) a liquid ingredient store (36);
d) a mixing station (14);
e) a central control unit (18) including a memory storing a plurality of recipes, in which the central control unit (18) is adapted to control the supply of ingredients from said dry non-grain ingredient store (35), said liquid ingredient store (36) and said grain product store (12) to said mixing station (14) and to operate the mixing station (14), and in which the control unit (18) is linked to an interface (98, 126) at which a selection of one of said plurality of recipes can be made, characterised in that the grain product store (12) comprises a plurality of grain product storages (12a-12d) each for storing a different type of grain product, and in that said control unit is operable in dependence on the recipe selected at said interface (98, 126) to select at least one grain product from among the different types of grain product stored in the plurality of grain storages (12a-d) and to deliver said at least one grain product to said mixing station (14) for mixing with the other ingredients in the preparation of a selected dough product.

In a preferred embodiment a grinder (16) is connected to said mixing station (14) whereby to grind said grain product immediately prior to its arrival at the mixing station.

The apparatus of the invention may further be characterised in that the control unit (18) is further operable to cause a dough from said mixing station (14) to be delivered to a proofer (88) and then a baking station (92) according to the selection of said recipe.

The mixing station preferably includes a plurality of separate mixers and the baking station includes a plurality of ovens (118, 120, 122), whereby the central control unit (18) is adapted to cause different selections of said ingredients to be supplied to the separate mixers (108, 110, 112) to cause batches of different doughs to be supplied to different ovens (118, 120, 122) and each oven (118, 120, 122) to be operated according to the selection of a said recipe.

A processor control unit is connected to the grain supply and both the wet and dry ingredients and controls the type and amount of ingredients and the amount of grain which is supplied to the mixer. In a preferred embodiment of the invention, the mixer is positioned on top of a scale. The scale determines the quantity of each ingredient which is fed into the mixer by sensing the weight of the applied ingredient. The scale is connected to the ingredient supplies through a processing unit so as to selectively activate and de-activate the ingredient supplies.

In one embodiment an extruder forms the dough into loaves and conveys the dough on a conveyor to a proofing unit which causes the dough to rise. The dough is then transferred to a baking oven and then to cooling racks once the baking step is completed.

In another embodiment of the apparatus of the invention, a plurality of mixers are employed for mixing a number of batches of dough. Each mixer can be supplied with a different set of ingredients so as to customise the type of bread to be produced.

Reference is made to the attached drawing of the present invention wherein reference to the numerals in the description refer to like parts throughout the several views and in which:
Figure 1 is a diagrammatical view of a first preferred embodiment of the breadmaking machine of the present invention; and
Figure 2 is a diagrammatical view of a second preferred embodiment of the breadmaking machine of the present invention.

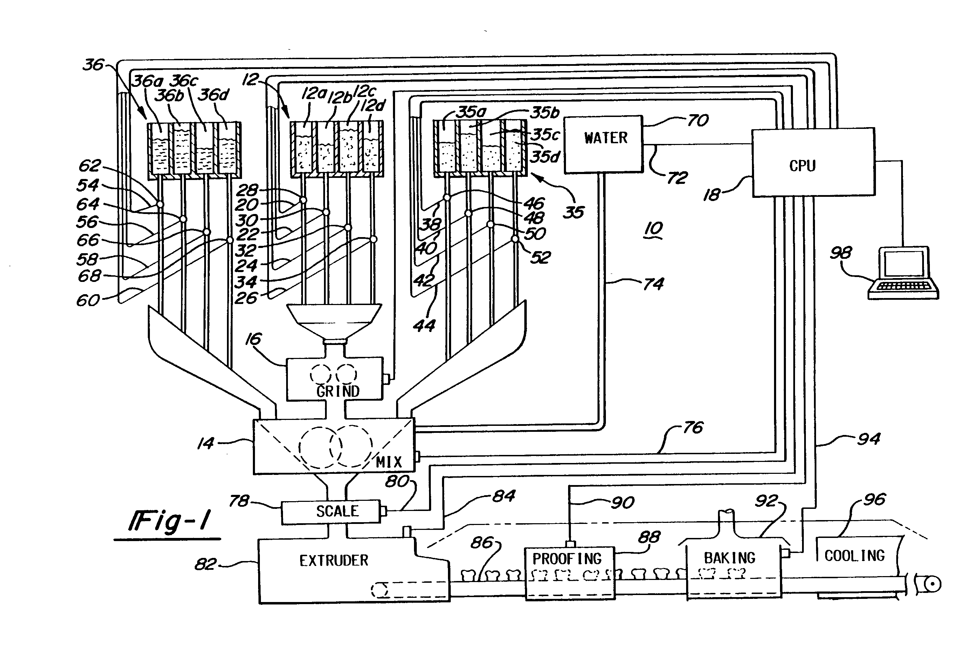

Referring to Figure 1, a first preferred embodiment of the breadmaking machine of the present invention is shown at 10. A whole grain storage bin 12 is connected to a mixing chamber 14. A grinder 16 lies intermediate the storage bin 12 and the mixing chamber 14 and grinds to a fine powder the desired quantity of grain supplied from the storage bin 12. The storage bin 12 can be divided into a number different kinds of grain storages 12a, 12b, 12c and 12d and one or more of these varieties can be selectively introduced into the mixing chamber 14.

A central processing unit 18 is operatively connected to the different kinds of grain storages 12a-12d by lines 20, 22, 24, and 26, respectively. A series of dispensing valves 28, 30, 32 and 34 determine the amount of grain to be dispensed from each supply 12a-12d according to preprogrammed recipe.

The processing unit 18 is also operatively connected to supplies of both dry ingredients 35 and wet ingredients 36. The dry and wet ingredient supplies 35 and 36 can also be divided into a number of different dry ingredient supplies 34a, 34b, 34c and 34d and wet ingredient supplies 35a, 35b, 35c and 35d and can be selectively inputted into the mixing chamber concurrently with and in the same fashion as the grain from the grain storage bin 12. For example, the dry ingredient storage can include ingredients such as salt, flour, sugar, yeast, fruit, poppyseeds, etc. The wet ingredients may include vanilla extract, water, etc.

The processing unit is connected to the dry ingredients 35a-35d by lines 38, 40, 42 and 44. Dispensing valves 46, 48, 50 and 52 are connected to the lines 38, 40, 42 and 44, respectively, and determine the amount of each ingredient which is sent to the mixing chamber. In the same fashion, the processing unit 18 is connected to the liquid ingredients 36a-36d by lines 54-60 which engage dispensing valves 62, 64, 66 and 68.

A separate water supply 70 is connected to the processing unit 18 by line 72 and may be inputted to the mixing chamber 14 through line 74 in the place of or in combination with the liquid ingredients 36a-36d as may be desired.

The mixing chamber 14 is supported on a scale 78. The scale determines the amount of each ingredient fed into the mixing chamber by sensing the weight of the ingredients. Line 80 connects the scale 78 to the processor 18.

The dough is then thoroughly mixed in the mixing chamber. The processor 18 is connected to the mixer 14 by line 76 and determines the extend to which mixing occurs. The scale 78 transfers the dough to an extruder 82, and the extruder is connected by line 84 to the processor 18. The extruder 82 sections the dough into loaves.

The extruder 82 is positioned relative to a conveyor 86 which transports the sectioned loaves of dough into a proofing unit 88. The proofing unit 88 is connected to the processing unit 18 by line 90 for temperature control in raising the bread. The loaves of bread are then transported from the proofing unit 88 along the conveyor 86 into a baking oven 92. The oven 92 is connected to the processor 18 by line 94 for temperature control and bakes the bread loaves according to the recipe stored in the processor 18. Once the baking stage is completed, the bread is transported to a cooling unit 96 and is loaded, as is conventionally known in the art, onto storage racks or the like.

According to the first preferred embodiment, a single large batch of bread loaves can be generated by the bread making machine of the present invention using the processing unit 18 and selecting from a wide variety of whole grains and wet/dry ingredients. A keyboard control 98 can be inputted to the processor 18 to facilitate the entry of a desired recipe program for generating a batch of loaves.

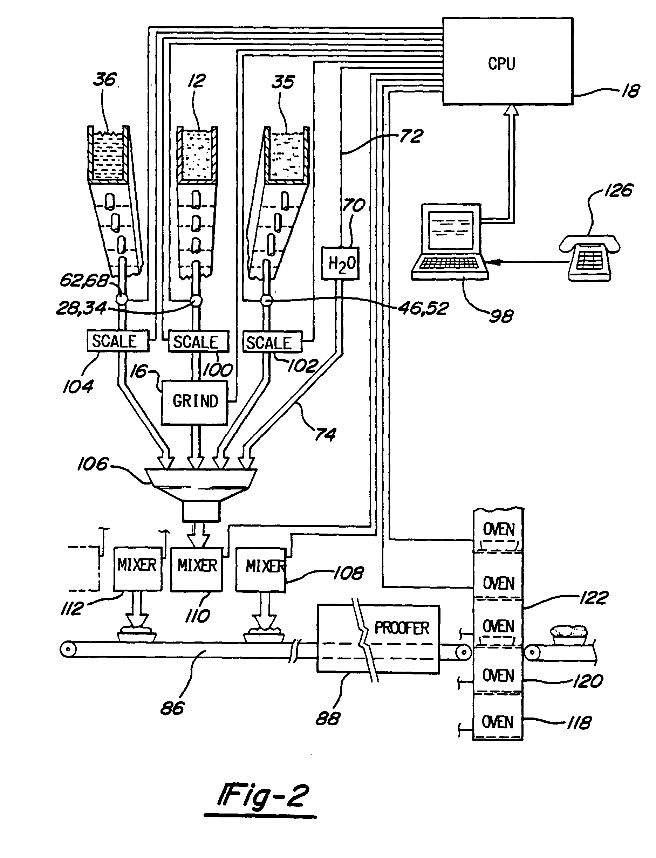

Referring to FIG. 2, there is shown a second preferred embodiment of the present invention. A number of the elements shown in FIG. 2 are common to the disclosure of FIG. 1 and are identified by the same numbers. In the place of the scale 78 of FIG. 1 there are provided separate scales 100, 102 and 104 located beneath the grain storage bin 12 and the dry ingredient and wet ingredient storage bins 35 and 36, respectively.

The ingredients 12, 35, 36 and the water input 70 are all fed for the dough mixture into a common hopper 106. The common hopper 106 transfers the dough mixture into a sequence of separate mixing chambers such as chambers 108, 110, 112. The provision of a number of separate mixing chambers enables a number of different bread recipes using different combinations of ingredients to be sequentially produced. Each mixing chamber therefore is capable of the production of a loaf of bread having characteristics different from any other mixing chamber.

The loaves of bread are individually mixed and are then deposited onto the conveyor 86. The loaves of bread are then conveyed into the proofing unit 88 as previously described where the bread is raised. A series of individual baking ovens such as ovens 118, 120, 122 are provided for receiving, respectively, each loaf of bread. The ovens then bake the bread as conventionally taught and deposit the loaves onto a conveyor or cooling racks.

The second embodiment of the invention accordingly enables the breadmaking machine to produce a different kind of loaf using different combinations of ingredients, as desired, for each subsequent loaf of bread produced. This is in contrast to the first embodiment which produces a larger single batch of bread loaves using a single recipe of ingredients.

The breadmaking machine of the present invention may be conveniently located in a retail outlet store, such as a supermarket. Customers can come into the store and custom order a specific loaf of bread to their own recipe criteria. As a further convenience, telephone service such as that indicated by telephone 126 could be hooked into the processor 18 and keyboard 98 such that the customer can order the loaf of bread from his or her home and automatic billing can be incorporated into the control unit 18 for this mode.

The elements of the mixer chamber, extruder, proofing unit, and ovens can also be integrated into one convenient machine which is fed by the various ingredient inputs.

A process for producing bread using the breadmaking machine of the present invention is also disclosed. The process includes means for feeding a selective amount of at least one whole grain, at least one dry ingredient, and at least one wet ingredient simultaneously into a common mixing chamber. Further steps include mixing the dough, portioning the dough into sections, and proofing the sections of dough until the dough rises. The dough is subsequently baked and cooled. The means for selectively feeding the various ingredients, as well as the operating of the mixing, portioning, extruding, proofing and baking processes are all controlled by the processing unit.

Accordingly, a single large batch or a number of different individual loaves of bread may be produced using the process of the present invention.

Having described my invention, many different embodiments will become apparent to one skilled in the art to which the invention pertains without deviating from the scope of the disclosure as set forth in the appended claims.

## Claims

1. A process for producing a variety of dough products comprising the operations of
a) selectively feeding at least one grain product from an associated grain store (12) to a mixing station (14);
b) selectively feeding at least one dry non-grain ingredient from an associated dry ingredient store (35) to the mixing station (14);
c) selectively feeding at least one liquid ingredient from an associated liquid ingredient store (36) to the mixing station (14);
d) mixing the ingredients supplied to the mixing station (14);
in which said feeding steps b) to d) are determined according to one of a plurality of recipes stored in a memory contained in a central control unit (18) and in which the selection of said recipe is determined via an interface (98, 126) linked to said central control unit (18), whereby step a) is performed by selecting said at least one grain product from a plurality of grain product types stored in a plurality of grain storages (12a-d) of said grain store (12) each containing a different grain product, the selection of said recipe by a customer at said interface (98, 126) determining the selection of said at least one grain product so as to produce a dough for a desired dough product.

2. A process according to Claim 1, **characterised in that** step b) and step c) are each performed by selecting said at least one dry non-grain ingredient and said at least one liquid ingredient from respective pluralities of dry non-grain ingredients and liquid ingredients stored in a respective plurality of storages (35a-d, 36a-d) of the dry ingredient store (35) and the liquid ingredient store (36) each containing a different respective ingredient.

3. A process according to Claim 1 or Claim 2, **characterised in that** it includes the further step of grinding said at least one grain product in a grinder (16) immediately prior to delivery to the mixing station (14).

4. A process according to any of Claims 1 to 3, **characterised in that** it further comprises the operations of:-
- delivering said dough to a proofer (88), and
- delivering the proofed dough to a baking station (92)
whereby to proof and bake the dough according to the selection of said recipe.

5. A process according to any preceding claim, **characterised in that** said grain and non-grain ingredients are fed to different mixers (108, 110, 112) within the mixing station (14), **in that** different doughs are supplied to respective ovens (118, 120, 122), and **in that** said ovens are operated by the control unit (18) to bake each of the separate doughs according to the selection of a recipe.

6. A process according to any preceding claim, **characterised in that** said at least one grain product is a whole grain product.

7. Apparatus for producing a variety of dough products comprising
a) a dry non-grain ingredient store (35);
b) a grain product store (12);
c) a liquid ingredient store (36);
d) a mixing station (14);
e) a central control unit (18) including a memory storing a plurality of recipes,
in which the central control unit (18) is adapted to control the supply of ingredients from said dry non-grain ingredient store (35), said liquid ingredient store (36) and said grain product store (12) to said mixing station (14) and to operate the mixing station (14), and in which the control unit (18) is linked to an interface (98, 126) at which a selection of one of said plurality of recipes can be made, **characterised in that** the grain product store (12) comprises a plurality of grain product storages (12a-12d) each for storing a different type of grain product, and **in that** said control unit (18) is operable, in dependence on the recipe selected at said interface (98, 126) to select at least one grain product from among the different types of grain product stored in the plurality of grain storages (12a-d) and to deliver said at least one grain product to said mixing station (14) for mixing with the other ingredients in the preparation of a selected dough product.

8. Apparatus according to Claim 7, **characterised in that** a grinder (16) is connected to said mixing station (14) whereby to grind said grain product immediately prior to its arrival at the mixing station (14).

9. Apparatus according to Claim 8, **characterised in that** the control unit (18) is further operable to cause a dough from said mixing station (14) to be delivered to a proofer (88) and then a baking station (92) according to the selection of said recipe.

10. Apparatus according to any of Claims 8 to 9, **characterised in that** the mixing station (14) includes a plurality of separate mixers (108, 111, 112) and the baking station (92) includes a plurality of ovens (118, 120, 122), whereby the central control unit (18) is adapted to cause different selections of said ingredients to be supplied to the separate mixers (108, 110, 112) to cause batches of different doughs to be supplied to different ovens (118, 120, 122) and each oven (118, 120, 122) to be operated according to the selection of a said recipe.

## Patentansprüche

1. Verfahren zur Herstellung verschiedener Teigprodukte, aufweisend die Vorgänge
a) des selektiven Zuführens wenigstens eines Kornprodukts aus einem zugehörigen Kornlager (12) zu einer Mischstation (14),
b) des selektiven Zuführens wenigstens einer kornfreien Trockeningredienz aus einem zugehörigen Trockeningredienzlager (35) zur Mischstation (14),
c) des selektiven Zuführens wenigstens einer Flüssigingredienz aus einem zugehörigen Flüssigingredienzlager (36) zur Mischstation (14),
d) des Mischens der der Mischstation (14) zugeführten Ingredienzen,
bei dem die Zuführschritte b) bis d) entsprechend einem von mehreren Rezepten bestimmt sind, die in einem Speicher gespeichert sind, der in einer Zentralsteuereinheit (18) enthalten ist, und bei dem die Wahl des Rezepts über eine Schnittstelle (98, 126) bestimmt ist, die mit der Zentralsteuereinheit (18) verbunden ist, wobei der Schritt a) durch Auswahl wenigstens eines Kornprodukts aus mehreren Kornproduktarten durchgeführt wird, die in mehreren Kornspeichern (12a-12d) des Kornlagers (12) gelagert sind, von denen jeder ein unterschiedliches Kornprodukt hat, und die Wahl des Rezepts durch einen Kunden an der Schnittstelle (98, 126) die Wahl wenigstens eines Kornprodukts bestimmt, um einen Teig für ein gewünschtes Teigprodukt herzustellen.

2. Verfahren nach Anspruch 1,
**dadurch gekennzeichnet, daß**
der Schritt b) und der Schritt c) jeweils durch Wahl wenigstens der wenigstens einen kornfreien Trockeningredienz und der wenigstens einen Flüssigingredienz aus mehreren kornfreien Trocken- und Flüssigingredienzen durchgeführt werden, die in jeweils mehreren Speichern (35a-d, 36a-d) des Trockeningredienzlagers (35) und des Flüssigingredienzlagers (36) gelagert sind, von denen jeder eine unterschiedliche jeweilige Ingredienz enthält.

3. Verfahren nach Anspruch 1 oder 2,
**dadurch gekennzeichnet, daß**
es den weiteren Schritt des Mahlens des wenigstens einen Komprodukts in einer Mühle (16) unmittelbar vor der Abgabe an die Mischstation (14) umfasst.

4. Verfahren nach einem der Ansprüche 1 bis 3,
**dadurch gekennzeichnet, daß**
es weiterhin die Schritte
- des Abgebens des Teigs an einen Treibeinrichtung (88), und
- des Abgebens des aufgegangenen Teigs an eine Backstation (92) umfasst,
um den Teig gemäß der Wahl des Rezepts aufgehen zu lassen und zu backen.

5. Verfahren nach einem der vorhergehenden Ansprüche,
**dadurch gekennzeichnet, daß**
die Korningredienzen und die kornfreien Ingredienzen verschiedenen Mischern (108, 110, 112) in der Mischstation (14) zugeführt werden, daß verschiedene Teige jeweiligen Öfen (118, 120, 122) zugeführt werden, und daß die Öfen von der Steuereinheit (18) betrieben werden, um jeden der separaten Teige gemäß der Wahl eines Rezepts zu backen.

6. Verfahren nach einem der vorhergehenden Ansprüche,
**dadurch gekennzeichnet, daß**
wenigstens ein Kornprodukt ein Vollkornprodukt ist.

7. Vorrichtung zur Herstellung verschiedener Teigprodukte, bestehend aus
a) einem Lager (35) für kornfreie Ingredienzen,
b) einem Kornproduktlager (12),
c) einem Lager (36) für Flüssigingredienzen,
d) einer Mischstation (14),
e) einer Zentralsteuereinheit (18) mit einem Speicher zum Speichern mehrerer Rezepte,
wobei die Zentralsteuereinheit (18) die Zufuhr von Ingredienzen vom Lager (35) für kornfreie Trockeningredienzen, vom Lager (36) für Flüssigingredienzen und vom Kornproduktlager (12) zur Mischstation (14) steuern und die Mischsstation (14) betreiben kann, und wobei die Steuereinheit (18) mit einer Schnittstelle (98, 126) verbunden ist, an der die Wahl eines der mehreren Rezepte durchgeführt werden kann,
**dadurch gekennzeichnet, daß**
das Kornproduktlager (12) mehrere Kornproduktspeicher (12a-d) zur jeweiligen Lagerung einer unterschiedlichen Kornproduktart hat, und daß die Steuereinheit (18) in Abhängigkeit von dem an der Schnittstelle (98, 126) gewählten Rezept betreibbar ist, um wenigstens ein Kornprodukt aus den verschiedenen Kornproduktarten zu wählen, die in den Kornspeichern (12a-d) gelagert sind, und wenigstens ein Kornprodukt an die Mischstation (14) zum Mischen mit den anderen Ingredienzen bei der Herstellung eines gewählten Teigprodukts abzugeben.

8. Vorrichtung nach Anspruch 7,
**dadurch gekennzeichnet, daß**
eine Mühle (16) an die Mischstation (14) angeschlossen ist, um das Kornprodukt unmittelbar vor seiner Ankunft an der Mischstation (14) zu mahlen.

9. Vorrichtung nach Anspruch 8,
**dadurch gekennzeichnet, daß**
die Steuereinheit (18) weiterhin betreibbar ist, um einen Teig aus der Mischstation (14) an eine Treibeinrichtung (88) und dann an eine Backstation (92) gemäß der Wahl des Rezepts abzugeben.

10. Vorrichtung nach Anspruch 8 oder 9,
**dadurch gekennzeichnet, daß**
die Mischstation (14) mehrere separate Mischer (108, 111, 112), und die Backstation (92) mehrere Öfen (118, 120, 122) aufweist, so daß die Zentralsteuereinheit (18) unterschiedliche Wahlvorgänge der Ingredienzen, die den separaten Mischern (108, 110, 112) zuzuführen sind, veranlassen kann, um Chargen verschiedener Teige verschiedenen Öfen (118, 120, 122) zuzuführen, und jeden Ofen (118, 120, 122) gemäß der Wahl der Rezepts zu betreiben.

## Revendications

1. Procédé de fabrication d'une diversité de produits de pâte comprenant les opérations consistant à :
a) alimenter de façon sélective au moins un produit en grains provenant d'une réserve de grains associée (12) vers un poste de mélange (14),
b) alimenter de façon sélective au moins un ingrédient sec qui n'est pas en grains provenant d'une réserve d'ingrédients secs associée (35) vers le poste de mélange (14),
c) alimenter de façon sélective au moins un ingrédient liquide provenant d'une réserve d'ingrédients liquides associée (36) vers le poste de mélange (14),
d) mélanger les ingrédients fournis au poste de mélange (14),
dans lequel lesdites étapes d'alimentation b) à d) sont déterminées suivant l'une d'une pluralité de recettes mémorisées dans une mémoire contenue dans une unité de commande centrale (18) et dans lequel la sélection de ladite recette est déterminée par l'intermédiaire d'une interface (98, 126) liée à ladite unité de commande centrale (18),
dans lequel l'étape a) est exécutée en choisissant ledit au moins un produit en grains parmi une pluralité de types de produits en grains stockés dans une pluralité de stockages de grains (12a à d) de ladite réserve de grains (12), chacun contenant un produit en grains différent, la sélection de ladite recette par un consommateur au niveau de ladite interface (98, 126) déterminant la sélection dudit au moins un produit en grains de façon à produire une pâte destinée à un produit de pâte souhaité.

2. Procédé selon la revendication 1, **caractérisé en ce que** l'étape b) et l'étape c) sont chacune exécutées en choisissant ledit au moins un ingrédient sec n'étant pas en grains et ledit au moins un ingrédient liquide parmi des pluralités respectives d'ingrédients secs qui ne sont pas en grains et d'ingrédients liquides stockés dans une pluralité respective de stockages (35a à d, 36a à d) de la réserve d'ingrédients secs (35) et de la réserve d'ingrédients liquides (36) contenant chacun un ingrédient respectif différent.

3. Procédé selon la revendication 1 ou la revendication 2, **caractérisé en ce qu'**il comprend l'étape supplémentaire consistant à moudre ledit au moins un produit en grains dans un moulin (16) immédiatement avant la délivrance au poste de mélange (14).

4. Procédé selon l'une quelconque des revendications 1 à 3, **caractérisé en ce qu'**il comprend en outre les opérations consistant à :
- délivrer ladite pâte à une chambre de levée (88), et
- délivrer la pâte levée à un poste de cuisson (92)
dans le but de faire lever et de cuire la pâte conformément à la sélection de ladite recette.

5. Procédé selon l'une quelconque des revendications précédentes, **caractérisé en ce que** lesdits ingrédients en grains et qui ne sont pas en grains sont alimentés vers des mélangeurs différents (108, 110, 112) à l'intérieur du poste de mélange (14), **en ce que** des pâtes différentes sont fournies à des fours respectifs (118, 120, 122), et **en ce que** lesdits fours sont mis en oeuvre par l'unité de commande (18) afin de cuire chacune des pâtes séparées conformément à la sélection d'une recette.

6. Procédé selon l'une quelconque des revendications précédentes, **caractérisé en ce que** ledit au moins un produit en grains est un produit en grains entiers.

7. Dispositif de fabrication d'une diversité de produits de pâte comprenant
a) une réserve d'ingrédients secs qui ne sont pas en grains (35),
b) une réserve de produits en grains (12),
c) une réserve d'ingrédients liquides (36),
d) un poste de mélange (14),
e) une unité de commande centrale (18) comprenant une mémoire mémorisant une pluralité de recettes,
dans lequel l'unité de commande centrale (18) est conçue pour commander l'alimentation en ingrédients provenant de ladite réserve d'ingrédients secs qui ne sont pas en grains (35), de ladite réserve d'ingrédients liquides (36) et de ladite réserve de produits en grains (12) vers ledit poste de mélange (14) et pour mettre en oeuvre le poste de mélange (14), et dans lequel l'unité de commande (18) est liée à une interface (98, 126) au niveau de laquelle une sélection de l'une de ladite pluralité de recettes peut être faite, **caractérisé en ce que** la réserve de produit en grains (12) comprend une pluralité de stockages de produits en grains (12a à 12d) stockant chacun un type différent de produit en grains, et **en ce que** ladite unité de commande (18) peut être mise en oeuvre selon la recette sélectionnée au niveau de ladite interface (98, 126) afin de choisir au moins un produit en grains parmi les types différents de produits en grains stockés dans la pluralité de stockages de grains (12a à d) et pour délivrer ledit au moins un produit en grains audit poste de mélange (14) en vue d'un mélange avec les autres ingrédients au cours de la préparation d'un produit de pâte sélectionné.

8. Dispositif selon la revendication 7, **caractérisé en ce qu'**un moulin (16) est relié audit poste de mélange (14) dans le but de moudre ledit produit en grains immédiatement avant son arrivée au poste de mélange (14).

9. Dispositif selon la revendication 8, **caractérisé en ce que** l'unité de commande (18) peut en outre être mise en oeuvre afin d'amener une pâte provenant dudit poste de mélange (14) à être délivrée à une chambre de levée (88) et ensuite à un poste de cuisson (92) selon la sélection de ladite recette.

10. Dispositif selon l'une quelconque des revendications 8 à 9, **caractérisé en ce que** le poste de mélange (14) comprend une pluralité de mélangeurs séparés (108, 111, 112) et **en ce que** le poste cuisson (92) comprend une pluralité de fours (118, 120, 122), dans lequel l'unité de commande centrale (18) est conçue pour amener des sélections différentes desdits ingrédients à être fournies aux mélangeurs séparés (108, 110, 112) afin d'amener des lots de pâtes différentes à être fournis aux fours différents (118, 120, 122) et chaque four (118, 120, 122) à être mis en oeuvre selon la sélection d'une dite recette.
